# EUROPEAN PATENT APPLICATION

(11) **EP 0 965 423 A2**
(43) Date of publication of application: **22.12.1999**
(21) Application number: 99304839.6
(22) Date of filing: 21.06.1999
(51) Int. Cl.: B29C 31/02

(54) **Apparatus for delivering fluent material**

(30) Priority: 19.06.1998 GB 9813140
(71) Applicant: Colormatrix Europe, Ltd., Knowsley, Merseyside L34 9GT (GB)
(72) Inventor: Glen, Richard, Liverpool, L15 9HJ (GB); Frost, M.D.W., Bollington, Macclesfield, SK10 5EL (GB)
(74) Representative: Every, David Aidan

(57) **Abstract**

Apparatus for delivering liquid colorant to an injection moulding device comprises a computer controlled dosing pump (7) that draws colorant in predetermined doses from first (5) and second (6) collapsible reservoirs of fluent material. The reservoirs (5,6) are vertically displaced relative to one another so as to present differential pressures of fluent material to an inlet (9) of the pump so that the pump initially draws fluid from a higher of the first (5) and second (6) reservoirs. As the colorant is drawn from the reservoirs (5,6) the partial vacuum causes the reservoirs to collapse. When the higher reservoir (6) is empty an alarm is sounded and colorant is drawn from the lower reservoir (5). The arrangement provides an early warning signal of an empty reservoir and allows significant time for an operator to change an empty reservoir whilst not interrupting the supply of colorant.

## Description

The present invention relates to apparatus for delivering fluent material to an injection moulding device and more particularly, but not exclusively, to apparatus for delivering colorant to a premixer of an injection moulding device.

In current plastics injection moulding applications liquid colorants for colouring moulded plastics are typically stored in a large floor-mounted drum. A positive displacement pump is submerged in the drum and operates to convey colorant to a premixer of the injection moulding device via a flexible hose. The pump draws colorant from the bottom of the drum and displaces it upwardly and out of the drum to the flexible hose. The pumped colorant is mixed with plastics resin by the premixer and the mix is delivered to the main body of the injection moulding machine.

When the supply of colorant is exhausted the empty drum is removed and replaced by a full drum. In order to do this the pump has to be lifted out of the empty drum and submerged in the replacement. Since the pump is covered in liquid colorant this is generally a messy operation and areas of the production floor can be soiled or contaminated by colorant dripping from the pump during the drum change.

In an alternative known arrangement colorant is drawn by a pump through a hose from an inverted transparent or translucent plastics container. A visual check is made at regular intervals to ascertain whether the container is nearly empty and needs replacing. Typically, an operator will undertake such a check at the beginning of each shift and estimate whether there is sufficient colorant left to last the length of the shift period. This approach dictates that containers are often discarded with a significant amount of colorant still present. In order to replace the container it is tilted on to a side face and the hose disconnected from the container outlet. This often results in spillage of colorant from the end of the hose and/or the container outlet.

It is an object of the present invention to obviate or mitigate the aforesaid disadvantages.

According to the present invention there is provided apparatus for delivering fluent material to an injection moulding device, the apparatus comprising a dosing pump having an inlet connected to outlets of at least first and second reservoirs of said fluent material and for supplying a predetermined amount of said fluent material to the device, said first and second reservoirs being vertically displaced to present differential pressures of fluent material to the pump inlet when the reservoirs are full so that the pump initially draws material from a higher of the first and second reservoirs, the first and second reservoirs comprising collapsible containers that progressively collapse as the fluent material is drawn from them by the dosing pump characterised in that at least one wall of each container is secured to a fixed surface.

This arrangement allows the pump to draw fluent material from one of the reservoirs in preference to the other until such time as one of them is almost empty and the pressures at the pump inlet are equal. Then when one of the reservoirs is empty the fluent material can be drawn from the other reservoir until such time as the empty reservoir is replaced. This allows the operator plenty of time in which to become aware of the need to replace one of the reservoirs and to effect replacement.

Each collapsible container is preferably housed within an outer housing, a wall of the housing forming said fixed surface. Preferably an upright wall of the container is secured to a corresponding wall of the housing.

In a preferred embodiment the container and housing are parallelpiped and are secured at two perpendicular walls.

The container may be formed with first and second parts, one being collapsible into the other and having a wall thickness less than that of the other.

The inlet of the dosing pump is preferably connected to the outlets of the first and second reservoirs by means of conduits that are snap connected to the outlets.

The inlet of the dosing pump is preferably connected to a manifold that receives ends of the conduits from the outlets of the reservoirs.

The pump may be peristaltic.

The apparatus may further comprise a support structure that has at least three platforms for supporting the first and second reservoirs and the dosing pump.

A specific embodiment of the present invention will now be described, by way of example only, with reference to the accompanying drawings in which:
Figure 1 is a schematic side view of apparatus according to the present invention;
Figure 2 is a diagrammatic representation of a reservoir of fluent material shown in a full condition and with part of an outer housing removed for clarity;
Figure 3 is a diagrammatic representation of the reservoir of figure 2 shown empty;
Figure 4 is a sectioned view through the middle of the reservoir of figure 3 shown together with a level sensing transducer;
Figure 5 is a perspective view from above and to one side of the apparatus of the present invention;
Figure 6 is a plan view of a manifold connecting the reservoirs of the present invention to the dosing pump;
Figure 7 is a front view of a snap coupling that connects the reservoir of the present invention to an outlet pipe; and
Figures 8 to 11 are perspective views of the reservoir showing it collapsing over a period of use of the apparatus of the present invention.

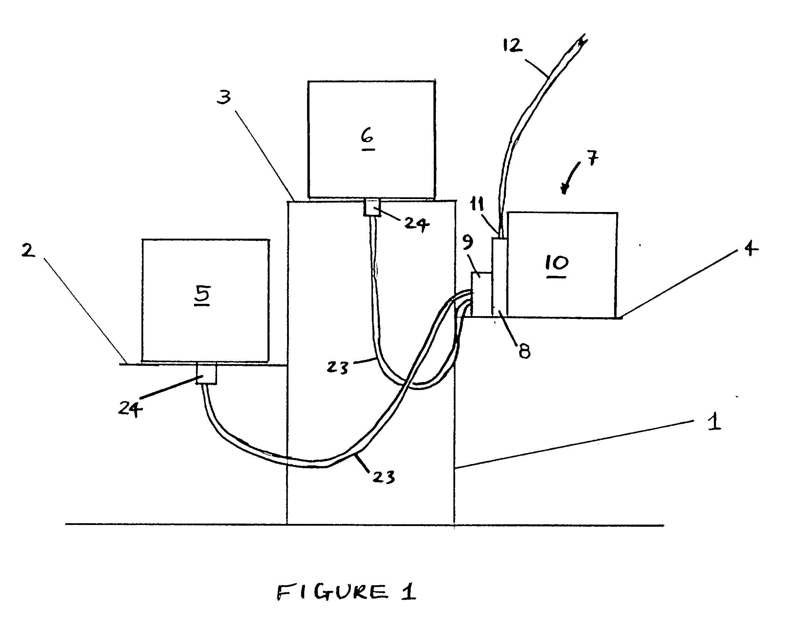

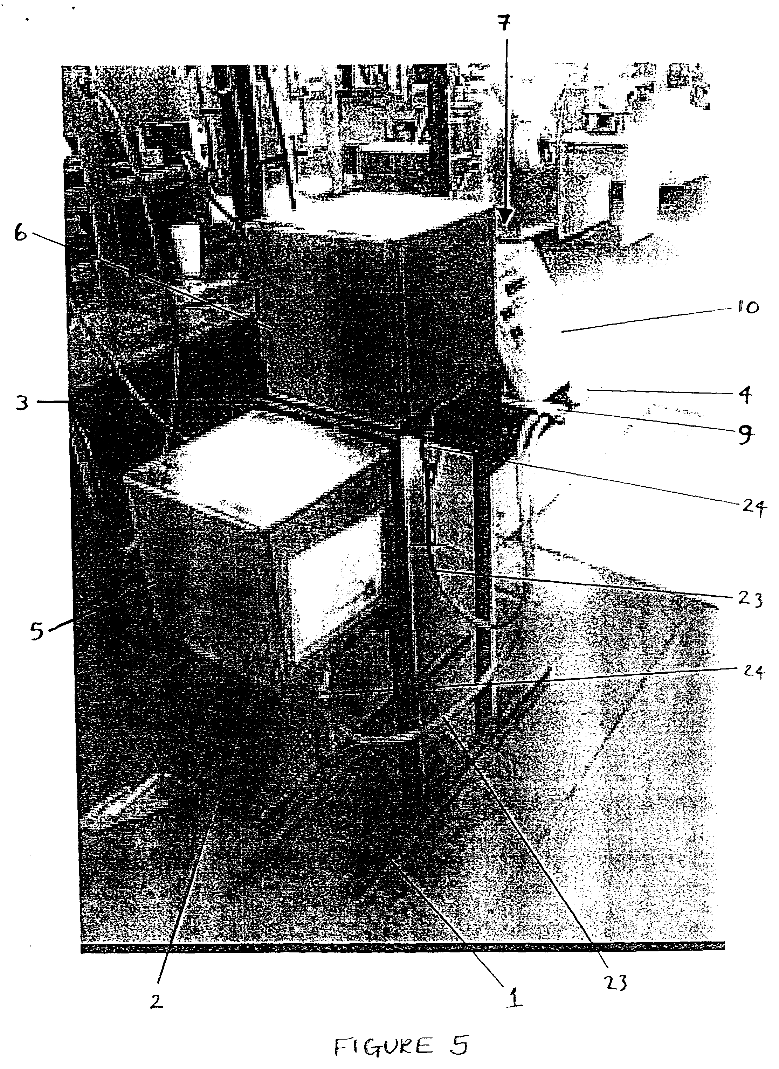

Referring now to the drawings, figures 1 and 5 show apparatus for delivering liquid colorant to a premixer (not shown) of a plastics injection moulding machine where it is mixed with plastics resin prior to moulding.

The apparatus comprises a floor mounted support frame 1 with three platforms 2, 3, 4. In the embodiment shown in figure 1 and 5 the support frame 1 is static but it is to be appreciated that it may take the form of a wheeled trolley. The platforms 2, 3, 4 support first and second reservoirs 5, 6 of liquid colorant that are relatively vertically displaced and a dosing pump assembly 7 comprising a peristaltic pump 8, a manifold 9 and a computer controlled dosing unit 10. An outlet 11 of the pump assembly 7 feeds the premixer (not shown) of the injection moulding machine (not shown) with predetermined doses of liquid colorant via a flexible nylon hose 12.

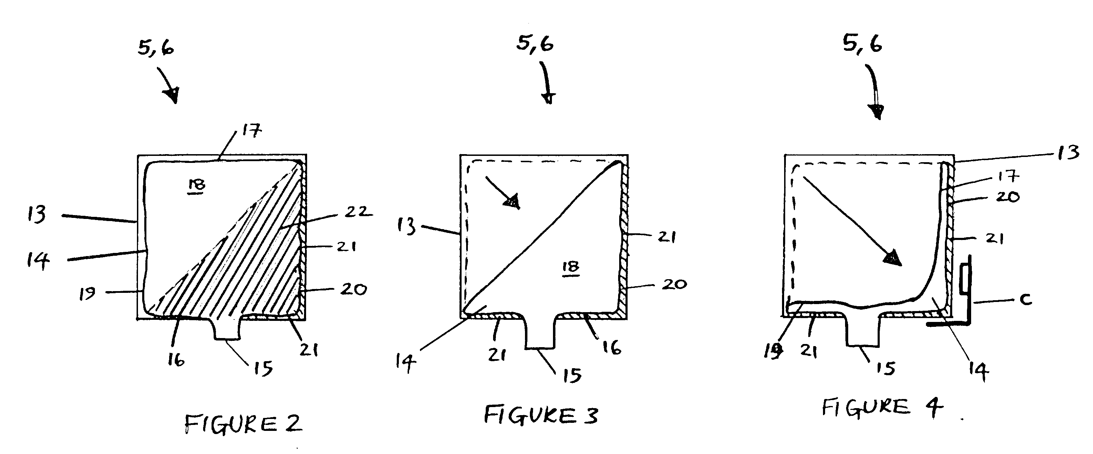

Each reservoir 5, 6 (see figures 2 to 4 and 8 to 11) comprises an outer housing 13 which may be in the form of. for example, a cardboard box in which is housed a collapsible flexible plastics container 14 of liquid colorant having an outlet nozzle 15 through which the colorant is delivered to the pump assembly 7. The collapsible container 14 is approximately cuboid having base, top, side, front and rear walls 16, 17, 18, 19, and 20. As can be seen from figure 2 the base and rear walls 16, 20 of the container 14 are secured to the corresponding internal surfaces of the box 13 by means of a suitable adhesive indicated by reference numeral 21. Each side wall 18 is similarly secured over half of its surface as indicated by the hatching 22 shown in figure 2. The volume of fluent material in the higher reservoir 6 is monitored as described below by a capacitative level sensor C (shown in figure 4) that is mounted on a bracket and positioned adjacent the base of the higher reservoir 6. The output of the sensor C is connected to an audible and/or visible alarm (not shown in the figures).

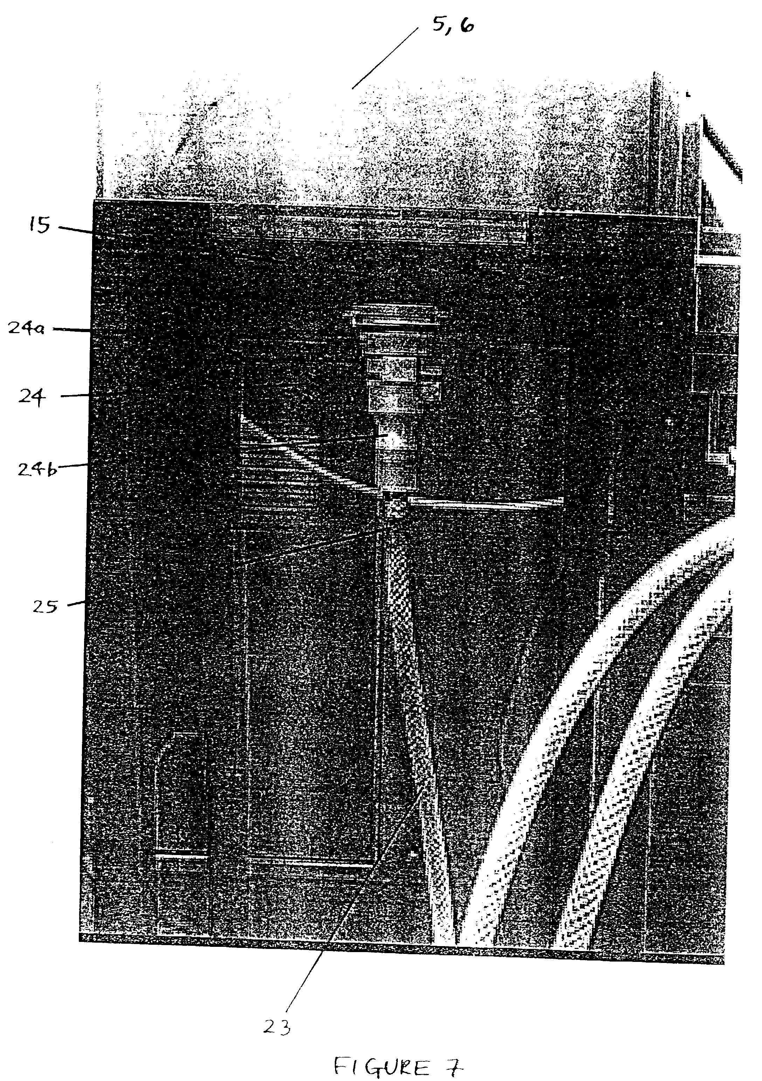

The outlet nozzle 15 of each reservoir 5, 6 is connected to the manifold 9 of the pump assembly 7 via flexible hosing 23 so that the pump assembly 7 can draw liquid colorant from the reservoirs 5,6. A snap coupling 24 (shown in detail in figure 7) connects one end of each hosing 23 to the respective container outlet nozzle 15 and has a first portion 24a secured to the nozzle outlet 15 of each reservoir 5,6 and a second portion 24b over which the end of the flexible hose 23 is received and secured thereto by means of a clamping element 25 such as jubilee clip or the like. The snap coupling 24 is of known design and enables the first and second portions 24a, 24b to be separated rapidly. The first portion 24a has an internal valve (not shown) that prevents liquid colorant from egressing from the nozzle 15 once the snap coupling 24 has been disconnected. This enables an empty or nearly empty reservoir 5, 6 to be disconnected and replaced by a full reservoir without spilling any colorant. The second portion 24b of the snap coupling is also fitted with an internal valve (not shown) that closes the end of the hosing 23 so as to prevent the pump assembly 7 attempting to draw air whilst the reservoir 5,6 is disconnected.

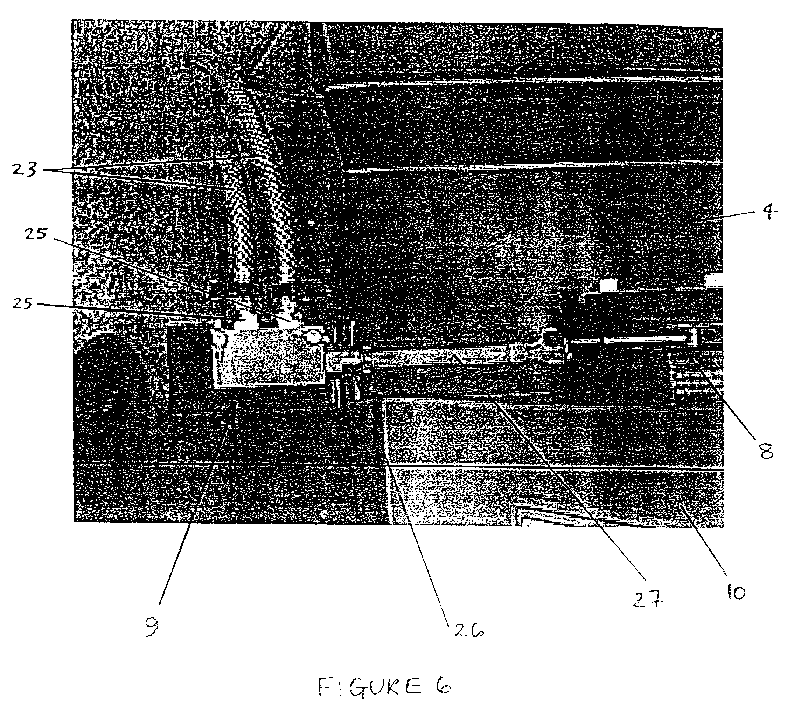

The manifold 9 (shown in detail in figure 6) comprises two inlet spigots 25 over which ends of the flexible hoses 23 are received and secured, and an outlet spigot 26 to which an inlet conduit 27 of the peristaltic pump 8 is connected. The peristaltic pump 8 is controlled by the dosing unit 10 which is of known configuration.

In use, the support frame 1 is positioned adjacent to a selected injection moulding machine. The liquid colorant reservoirs 5, 6 and pump assembly 7 are placed on the platforms 2. 3, 4 and interconnected as described above. The outlet 11 of the pump assembly 7 is then connected to the premixer by the flexible hose 12.

The injection moulding machine and the dosing unit 10 are turned on and the peristaltic pump 8 is primed. When priming is complete the dosing unit 10 is instructed by the computer with regard to the pump calibration and the desired delivery rate, and the apparatus is then switched to operate. During operation of the machine a signal from an extrusion screw of the injection moulding machine is fed back to the dosing unit 10 to control the pump operation.

The liquid colorant is supplied automatically by the peristaltic pump 8 when required by the extrusion screw, the colorant being drawn from the two reservoirs 5, 6 via the manifold 9. Initially, when both reservoirs 5, 6 are full colorant is drawn from the higher reservoir 6 by virtue of the greater head and therefore the greater fluid pressure at the manifold 9. As the higher reservoir 6 is emptied its container 14 collapses in a controlled fashion as represented by the arrows in figures 3 and 4 (the dotted lines represent the position of the container walls when the container is full). The egression of the colorant from the container 14 creates a partial vacuum and the top and front walls 17, 19 collapse inwardly towards the base and rear walls 16, 19 as shown. The remaining colorant is then concentrated in a region at the base and rear walls 16, 19 and when the colorant at the rear wall 19 drops below a certain level the capacitative lcvel sensor C is activated and an alarm (to which the sensor is connected) is sounded to warn the operator of the need to replace the reservoir. At a point in time when the higher reservoir 6 is partially empty (say, for example, two-thirds empty) the pressures at the manifold inlet spigots 25 become equal and the pump 8 begins to draw colorant from the lower reservoir 5 as well. When the higher reservoir 6 is empty, colorant is then drawn exclusively from the lower reservoir 5. Thus after the alarm is activated there is still a significant amount of time before the colorant available to the pump is exhausted and therefore the alarm provides an advance warning to the operator of the need to replace the empty reservoir.

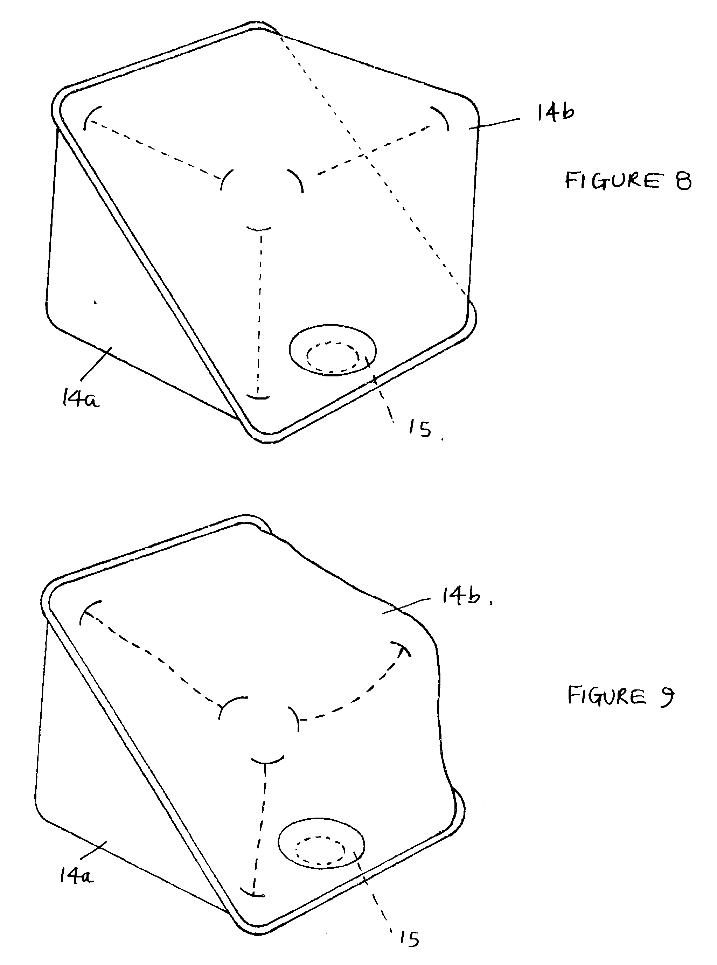

Figures 8 to 11 show the container and the sequence in which it collapses in more detail. The container is constructed from two portions that are joined along a diagonal plane through the cuboid container. A first portion 14a has a wall thickness that is significantly greater than that of the second portion 14b. The outer surface of the walls of the first portion 14a are bonded to the interior of the box as described above. This serves to stiffen the container and allows the second portion 14b to collapse into the first portion 14a as shown in a predictable manner. In figure 8 the container is full of colorant and is therefore substantially cuboid.

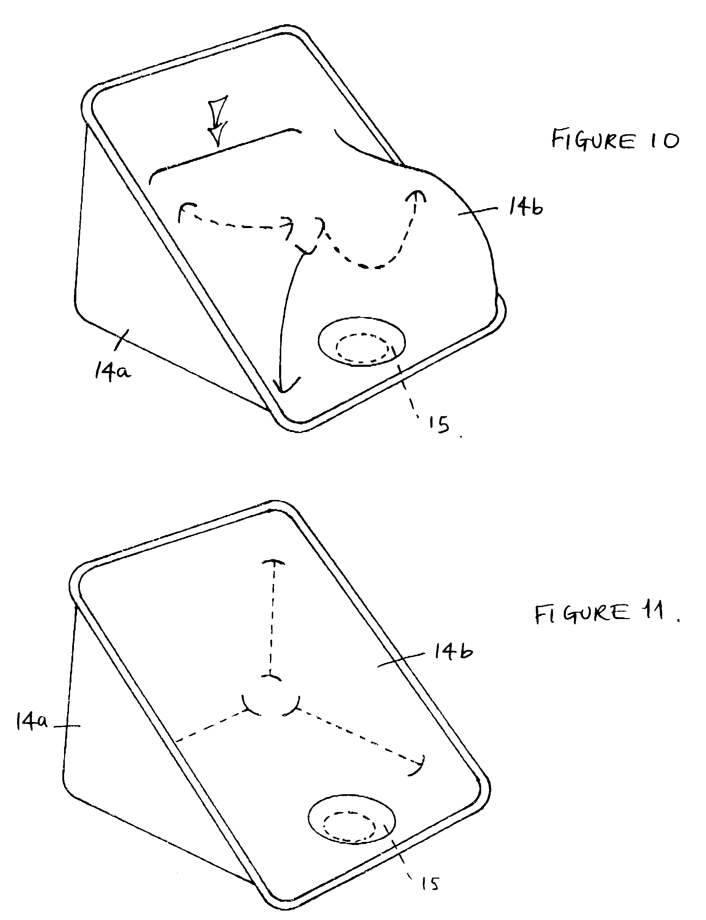

As colorant is used the second portion 14b of the container is sucked inwardly towards the bonded walls of the first portion 14a of the container as shown in figures 9 and 10, until it is fully collapsed as shown in figure 11.

The empty reservoir can either be replaced by the lower reservoir (in which case a full one is put the latter's place) or a full reservoir. The replacement procedure is simple in view of the snap coupling 24 and can be done without interrupting the operation of the injection moulding device since the pump 8 will continue to draw from the reservoir that is still connected. Using a snap coupling 24 such as that described above makes drum replacement a quick, easy and clean operation and removes the need for repeated priming of the pump.

It will be appreciated that numerous modifications to the above described design may be made without departing from the scope of the invention as defined in the appended claims. For example, the shape and configuration of the reservoirs may take any appropriate form and more than two reservoirs may be provided should the application require. Moreover the support frame 1 may take any suitable form including a wheeled trolley having wheels at one end and support legs at the other, the trolley being moveable by raising the legs from the ground to enable the wheels to rotate. The reservoirs may be disposed directly above one another on the frame as opposed being horizontally displaced as described above.

It is also to be understood that other types of pump, for example piston or moyno, may be used in place of a peristaltic pump.

Finally it is to be understood that in order for the container to collapse in a predictable manner it is not essential for it to be secured into a housing provided at least one of its walls is secured to a fixed surface.

## Claims

1. Apparatus for delivering fluent material to an injection moulding device, the apparatus comprising a dosing pump having an inlet connected to outlets of at least first and second reservoirs of said fluent material and for supplying a predetermined amount of said fluent material to the device, said first and second reservoirs being vertically displaced to present differential pressures of fluent material to the pump inlet when the reservoirs are full so that the pump initially draws material from a higher of the first and second reservoirs, the first and second reservoirs comprising collapsible containers that progressively collapse as the fluent material is drawn from them by the dosing pump characterised in that at least one wall of each container is secured to a fixed surface.

2. Apparatus according to claim 1, wherein each collapsible container is housed within an outer housing, a wall of the housing forming said fixed surface.

3. Apparatus according to claim 2, wherein at least one upright wall of the container is secured to a corresponding wall of the housing.

4. Apparatus according to claim 3, wherein two perpendicular walls of the container are secured to corresponding walls of the housing.

5. Apparatus according to any preceding claim, wherein each container is formed in first and second parts, one being collapsible into the other and having a wall thickness less than that of the other.

6. Apparatus according to claim 5, wherein the container is parallelepiped with first and second parts being joined along a diagonal plane.

7. Apparatus according to any preceding claim, wherein the inlet of the dosing pump is connected to the outlets of the first and second reservoirs by means of conduits that are snap connected to the outlets.

8. Apparatus according to any preceding claim, wherein the inlet of the dosing pump is connected to a manifold that receives ends of the conduits from the outlets of the reservoirs.

9. Apparatus according to any preceding claim wherein the pump is a peristaltic pump.

10. Apparatus according to any preceding claim, further comprising a support structure that has at least three platforms for supporting the first and second reservoirs and the dosing pump.
